Europäisches Patentamt

European Patent Office

Office européen des brevets

(11) Publication number: **0 092 970**
**B1**

(12) **EUROPEAN PATENT SPECIFICATION**

(45) Date of publication of patent specification: **28.02.90**

(51) Int. Cl.⁵: **A 22 C 13/00, A 22 C 11/12, A 22 C 11/00, A 22 C 15/00**

(21) Application number: **83302241.1**

(22) Date of filing: **20.04.83**

(60) Divisional application **88113498 filed on 19.08.88.**

(54) **Apparatus for forming and delivering unfilled tubular casings to a storage station.**

(30) Priority: **23.04.82 ES 512263**
**23.04.82 ES 265171 u**

(43) Date of publication of application:
**02.11.83 Bulletin 83/44**

(45) Publication of the grant of the patent:
**28.02.90 Bulletin 90/09**

(84) Designated Contracting States:
**BE DE FR GB IT LU NL SE**

(56) References cited:
**DE-C- 564 187**
**GB-A- 649 847**
**GB-A-1 180 067**
**US-A-3 261 268**

(73) Proprietor: **Barroso, Angel Lorenzo**
**Arquitecto Cabanes, s.n.**
**Mataro Barcelona (ES)**

(72) Inventor: **Barroso, Angel Lorenzo**
**Arquitecto Cabanes, s.n.**
**Mataro Barcelona (ES)**

(74) Representative: **Orr, William McLean et al**
**Haseltine Lake & Co Hazlitt House 28**
**Southampton Buildings Chancery Lane**
**London WC2A 1AT (GB)**

Courier Press, Leamington Spa, England.

## Description

This invention relates to apparatus for forming and delivering unfilled tubular casings to a storage station at which they are suspended, the casings being formed from a web of tubular film around which a knotted loop is taken to form a closed end of the casing and the tubular film then being cut to form a predetermined length of tubular casing attached to the knotted loop.

There is disclosed in Spanish Patent No. 475, 086 (European Patent Publication No. 0010937) in the name of the Applicant, a method and device for knotting openings of flexible containers automatically. A knotted loop is formed around a flexible container from cord which is applied in loops along one side of a paper laminate. The method and apparatus disclosed provide a significant advance in the automatic knotting of sausage skins, particularly over the equipment disclosed in the Spanish Patent No. 295, 446 (U.K. Patent Specification No. 1, 077, 784) also in the name of the Applicant, and also over other known methods of knotting sausage skins.

In the factory production of sausages, it is usual practice to form unfilled tubular casings from a roll supply of folded tubular skin by cutting the skin to lengths, and then knotting one of the ends of the cut length. The other end is left open so as to be able to introduce sausage meat and the like into the casing at a later stage in the production. In many production techniques known to date, the knotting of the ends of the tubular casings has been carried out manually, one by one, with all its inherent disadvantages as compared with automatically operating equipment.

An example of a machine for automatically knotting and cutting tubular casings is shown in DE—C—564187 which discloses a machine comprising the features of the preamble of claim 1. The apparatus shown in this patent feeds a continuous tubular skin to a knotting and cutting station, where a knotted loop is tied around the skin. The loop is then pulled transversely to the casing by the knotting device over a collecting hook, and a carriage, holding the neck of the casing by means of a gripper, then pulls the casing in the feed direction, supplying the next length to the knotting and cutting station. The casing is then cut to provide the desired length attached to the loop, whereupon the gripper releases the cut length, which remains supported on the hook by its loop, and the carriage returns to the knotting and cutting station to begin a new cycle. Because of the several movements of gripper, carriage and knotting device this is a relatively complicated apparatus, necessitating a considerable number of linkages.

Accordingly, the present invention has been developed primarily with a view to providing a simple apparatus which can operate automatically to form and deliver unfilled tubular casings in such a way that an operator in charge of the apparatus only has to attend to the routine control over three matters, namely (a) a proper supply of tubular film (from which the casings are formed) to the apparatus; (b) maintain a supply of cord or other knotted-loop-forming material; and (c) to unload, when necessary, tubular casings each suspended, at one end, by respective knotted loops in a store provided in the apparatus.

According to the invention there is provided an apparatus for forming unfilled tubular casings and delivering them to a storage station at which they are suspended, the apparatus comprising means for supplying a web of tubular film, a knotting and cutting station having a knotting device arranged to apply a knotted loop around the tubular film to form a closed end of a tubular casing and a cutting device arranged to cut the tubular film and thereby form a predetermined length of tubular casing attached to the knotted loop, means for conveying the tubular casing to the storage station to be suspended by its knotted loop at the station, including an engaging device operable to engage the closed end of the tubular film and to draw it towards the storage station thereby to advance the tubular film relative to the knotting and cutting station; control means operably coupled with the knotting device and the cutting device, and operated by the engaging device as it moves an engaged knotted loop to the storage station, in order to effect application of a further knotted loop around the tubular film and to cut the film so as to provide the predetermined length of tubular casing; means for setting the length of the path of travel of the engaging device thereby to adjust the cut length of the tubular casings; and a storage device to permit transfer to the storage station of a tubular casing having a knotted loop at one end, to provide a store of suspended unfilled tubular casings, characterised in that the engaging device comprises a hook adapted to engage and release the knotted loop of a casing and is moveable automatically back and forth between the knotting and cutting station and the storage station so that the hook under the control of the control means automatically engages the closed end of the tubular film by means of its knotted loop, draws it towards the storage station and thereafter releases the loop; and in that the storage device is arranged at the storage station to receive the loop after the tubular film has been advanced.

One embodiment of the invention will now be described in more detail, by way of example only, with reference to the accompanying drawings, in which:

Figure 1 is a side view of part of the apparatus for forming and delivering unfilled tubular casings to a storage station at which they are suspended;

Figure 2 is a detail view of a hook of the apparatus which is engageable with a knotted loop of a tubular casing;

Figures 3, 4, 5 and 6 illustrate the part of the apparatus shown in Figure 1 in successive stages of a cycle of operation;

Figure 7 is a perspective illustration of the apparatus during transfer of a knotted loop from the hook shown in Figure 2 to a storage device at a storage location of the apparatus;

Figure 8 illustrates the return movement of the apparatus to the storage station in an inoperative condition of the hook i.e. when it is not drawing a knotted loop and attached tubular casing to the storage station.

Referring now to the drawings, there will be described apparatus which operates automatically to form the deliver unfilled tubular casings and deliver them to a storage station at which they are suspended until such time as they are required. The tubular casings are formed from a web supply of tubular film around which a knotted loop is applied to form a closed end of the tubular casing. The tubular film is then cut to form a predetermined length of tubular casing attached to the knotted loop, which is then conveyed to a storage station at which the casings are suspended. A knotting and cutting station is provided having a knotting devices arranged to apply the knotted loop around the tubular film, and also a cutting device which cuts the tubular film after the knotted loop has been drawn towards the storage station, whereby a predetermined length of tubular casing is drawn out also and is then cut by the cutting device. The knotting and cutting devices are not shown in detail herein, but conveniently may take the form of the knotting device and cutting device arrangement described and illustrated in more detail in European Patent Publication No. 0,010,937 (Application No. 79302354.0) of the Applicant, to which reference is directed. However, the means for forming the knotted loop around the tubular film, and the means for cutting the tubular casing to length are not major elements of the invention, and any suitable means may be provided, as desired.

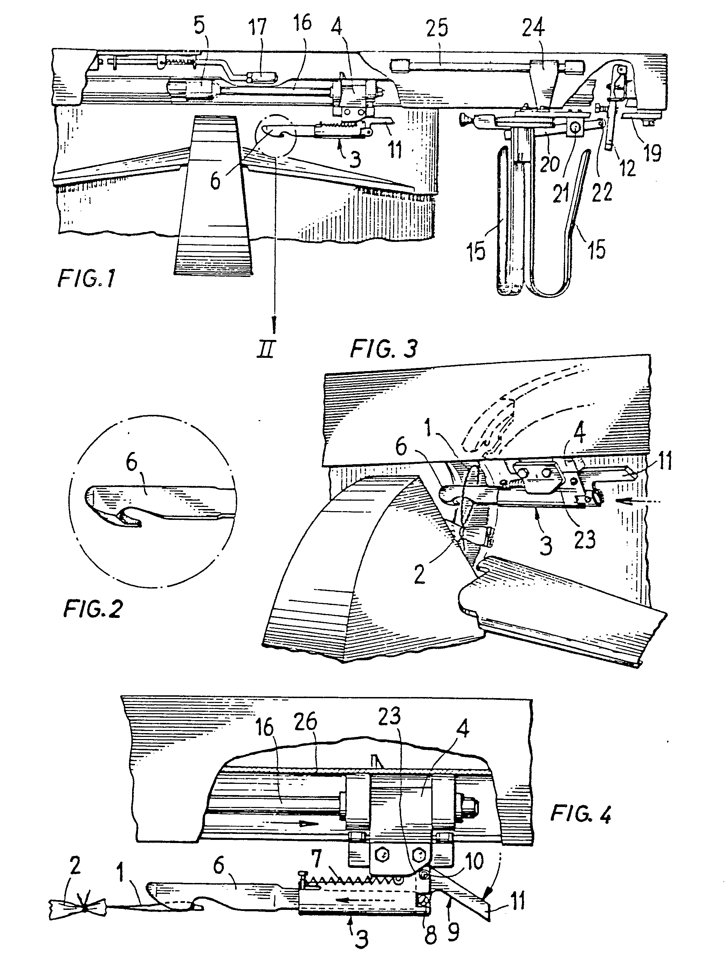

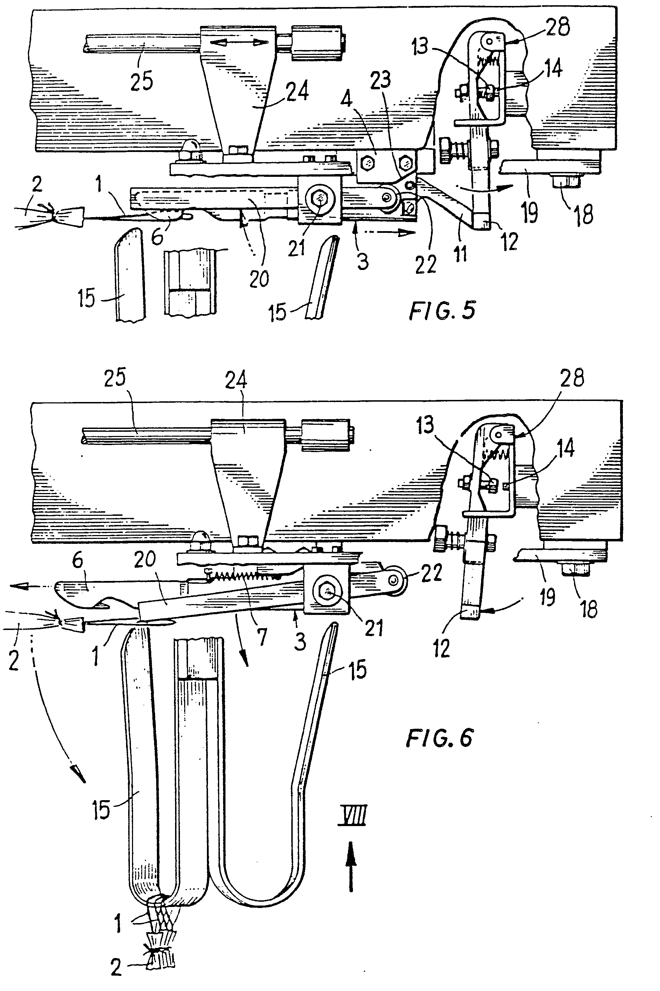

Part of the apparatus is illustrated in Figure 1, and comprises an engaging device for engaging a knotted loop formed at one end of a tubular casing, the engaging device being designated generally by reference numeral 3, and comprising a hook 6 at one end and an actuator lever 9 at an opposite end, all of which are carried by a movable support 4. The engaging device is movable automatically back and forth between a knotting and cutting station and a storage station provided by the apparatus. The knotting and cutting station is shown more clearly in Figure 3, at which it will be seen that a knotted loop 1 has been applied around one end of a tubular casing 2. As indicated above, the means for forming the knotted loop is not shown in detail herein, though it is shown schematically, in dash-dot lines in Figure 3, somewhat similar to the knotted loop forming means disclosed in European Patent Publication referred to above. The storage station is shown in more detail in Figure 6, at which is provided one or more storage devices 15 on which a stack of unfilled tubular casings can be hung via their respective knotted loops 1.

The movable support 4 is caused to reciprocate between the two stations by means of an operating cylinder 5, and movement towards the knotting and cutting stations, as shown in Figure 3, enables the hook 6 to engage knotted loop 1. Subsequent return of the support 4 to the storage station causes the knotted loop 1 to be drawn towards the storage station, thereby also drawing an attached length of tubular film which will form the tubular casing 2 upon subsequent cutting of the tubular film at the knotting and cutting station.

The engaging device 3 takes the form of a shuttle, to the leading end of which the hook 6 is attached. The hook 6 is capable of limited longitudinal movement relative to the shuttle 3, and a spring 7 tends to draw the hook 6 in a direction towards the support 4. At the opposite end of the shuttle 3 i.e. the trailing end, an actuator lever 9 is pivotally connected to the rear end 8 of the hook 6, and is pivotally mounted on the support 4 by means of a pivot 10 (see Figure 4). The actuator lever comprises an angle lever which is pivotal between an operative position, shown in Figures 4 and 5, and an inoperative position shown in Figures 1, 3 and 8. The actuator lever 9 adopts the operative position when the hook 6 has come into engagement with a properly formed knotted loop 1 at the end of tubular casing 2. With the actuator lever 9 in the operative position, return movement of the shuttle 3 to the storage station causes the actuator lever 9 to operate control means which controls the cycle of operation of the apparatus.

However, in the event of a fault at the knotting and cutting station by reason of (a) an improper or failed supply of cord for the formation of the knotted loop 1 or (b) a failure in the supply of tubular film, the actuator lever 9 remains in its inoperative position during the return movement to the storage station, and the actuator lever then does not operate on the control means to initiate a further cycle of operation.

The actuator lever 9 includes an actuator arm 11 which extends horizontally in the inoperative position of the actuator lever 9, and extends in a downwardly inclined position, as shown in Figures 4 and 5, in the operative position.

At the commencement of a cycle of operation, the shuttle 3 occupies an initial idling position in which it is located at its most distant position from the knotting point (knotting and cutting station). The shuttle 3 is then advanced by the operating cylinder 5 towards the knotting point, as shown in Figure 3, passes through the knotted loop 1 and then commences the return movement to the storage station, as shown in Figure 4, engaging with the loop 1 and drawing a portion of the tubular film away from the knotting point towards the storage station until the initial position is again reached, as shown in Figure 5.

During the return movement, as shown in Figure 4, the resistance offered by the tubular film overcomes the action of the spring 7 which acts upon the hook 6, thereby withdrawing the hook 6 relative to the support 4. This then causes the actuator lever 9 to pivot about pivot 10 from its inoperative position to its operative position so that, upon the return movement of the shuttle 3, the actuator arm 11 engages with an actuator lever 12 of the control means which controls the reciprocation of the shuttle 3, and also of the knotting device and the cutting device provided at the knotting and cutting station.

Thus, a new cycle of operation is then initiated and, at the same time as this takes place, a portion of the tubular film is cut (extending between the storage station and the knotting and cutting station) so as to provide a predetermined length of tubular casing attached to the knotted loop 1. As the shuttle 3 moves again towards the knotting point, as shown in Figure 6, the knotted loop 1, with the recently cut length of tubular casing attached thereto, then becomes freed automatically from the hook 6 so as to be guided, partly under gravity, to engage with the upper end of hooking device 15 from which the tubular casings are suspended.

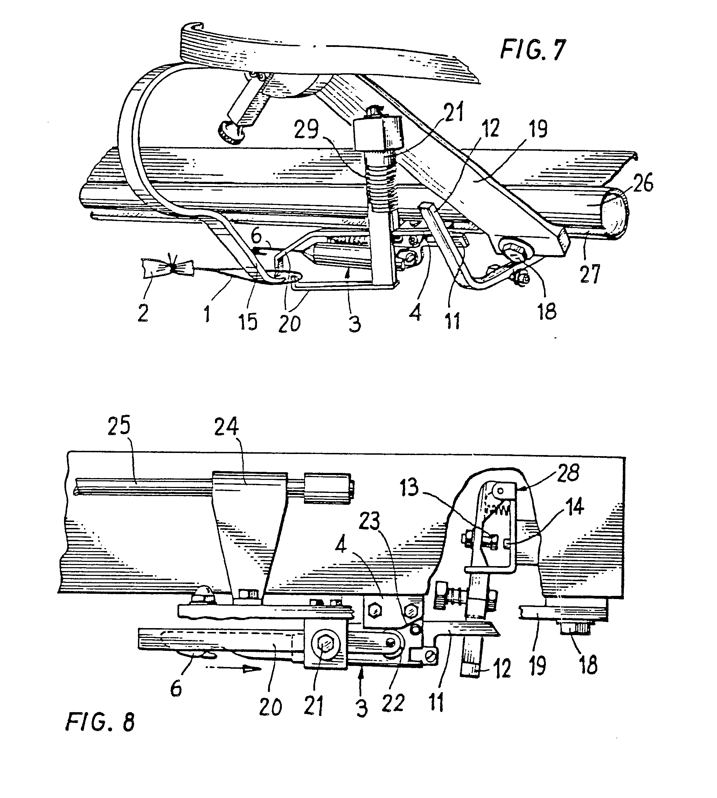

In the event of a fault occurring at the knotting and cutting station, so that there is no knotted loop 1 (attached to the tubular film) available for engagement by the hook 6, then the shuttle 3 carries out advance towards the knotting point, and return to the storage station with the actuator lever in the inoperative position throughout, so that operation of the apparatus then automatically stops. The non-engagement between actuator arm 11 and actuator 12, in this situation, is shown in Figure 8. In order to reciprocate the movable support 4, the operating cylinder 5 is connected by a piston rod 16 to the support 4, and end stops 13 and 17 define the limits to the reciprocating movement in each direction of the support 4. When the shuttle 3 returns to the storage station, as shown in Figure 5, actuator arm 11 operates actuator 12 which causes limit stop 13 to operate a drive push button 14 which controls the operation of the knotting and cutting devices (not shown) at the knotting and cutting station. Also, the advance movement of the shuttle 3 from the storage station is initiated under the action of operating cylinder 5. When the shuttle 3 reaches the knotting and cutting station, limit stop 17 is operated by the movable support 4, which reverses the direction of movement of the support 4 under the action of rod 16 operated by cylinder 5.

The actuator 12, limit stop 13, and push button 14 comprise, in combination with a control arrangement designated generally by reference numeral 28, control means which controls the cycle of operational movement of the shuttle 3, and also of the knotting and cutting devices provided at the knotting point.

In order to vary the length of tubular film which is cut in order to form each tubular casing 2, the position of the control means, and also of the storage station, are jointly, movable longitudinally along the path of movement between the two stations of the apparatus. To achieve adjustment of this length, a screw 18 is provided which adjustably connects the drive control arrangement 28 to a protective tubular casing 26 by being taken through a longitudinal slot 27 formed in casing 26. In addition, screw 18 connects a support bar 19 of the storage devices 15 so that these also can be adjusted along the length of the tubular casing 26. Movement of the screw or bolt 18 along slot 27 will cause adjustment of the distance between the two stations of the apparatus, and thereby adjust the cut length of each tubular casing 2. For ease of understanding, the support bar 19 has been cut away, in the illustrations of Figures 1, 5, 6 and 8.

As illustrated, two hook shaped storage devices 15 are provided so that, when one of them is fully loaded with casings 2, it can be pivoted on its support until the remaining device 15 which is empty can take up a position ready to receive a further succession of knotted loops 1. Accordingly, it is not necessary to stop the operation of the apparatus to remove the casings 2, until both of the storage devices are fully loaded. If desired, further storage devices 15 may be provided at the storage station.

In order to guide the movement of the knotted loops 1 from hook 6 onto the upper end of storage device 15, there is an arrangement of pushing rods 20 which help the loops 1 to move into engagement with the upper end of a storage device 15 after becoming detached from the hook 6 of the shuttle 3. This guiding is shown in Figure 6, which is the initial part of a new cycle of movement of the shuttle 3 towards the knotting point. Upon termination of the previous cycle of movement, as shown in Figure 5, the push rods 20, which form a set, are normally in a downwardly pivoted position about a pivot 21 under the action of a torsion spring 29, but are pivoted upwardly to a horizontal position by engagement of a wheel 22 with a ramp 23 provided on the support 4. The wheel 22 is provided on the free end of the rods 20, and engages the ramp 33 so as to pivot the rods 20 upwardly about pivot 21. This is the situation as shown in Figure 5. However, when the wheel 22 no longer engages the ramp 23, which coincides with the moment when the hook 6 becomes unfastened from the knotted loop 1 (see Figure 6), the rods 20 return to their original idle position under the action of torsion spring 29 and thereby push the knotted loop 1 downward onto the upper end of the hook shaped storage device 15.

The hook shape storage devices 15, and the push rods 20, form a unit which is capable of being altered in position, in that the unit is suspended by a bracket 24 from a guide bar 25 along which the bracket 24 can be adjusted.

In order to assist in the formation of a knotted loop at one end of a tubular casing, it is preferred that a device is provided upstream of the knotting and cutting station in order to form the web of tubular film with multiple longitudinal pleats. A suitable device is described in the applicant's copending European application No. 88 113 498.5.

## Claims

1. Apparatus for forming unfilled tubular casings and delivering them to a storage station at which they are suspended, the apparatus comprising:

means for supplying a web of tubular film (32),

a knotting and cutting station having a knotting device arranged to apply a knotted loop (1) around the tubular film (32) to form a closed end of a tubular casing (2) and a cutting device arranged to cut the tubular film and thereby form a predetermined length of tubular casing (2) attached to the knotted loop (1),

means for conveying the tubular casing (2) to the storage station to be suspended by its knotted loop (1) at the station, including an engaging device (3, 4, 6) operable to engage the closed end of the tubular film (32) and to draw it towards the storage station thereby to advance the tubular film relative to the knotting and cutting station;

control means (13, 14, 28) operably coupled with the knotting device and the cutting device, and operated by the engaging device (3, 4, 6, 11) as it moves an engaged knotted loop to the storage station, in order to effect application of a further knotted loop around the tubular film and to cut the film so as to provide the predetermined length of tubular casing (2); means (18, 19) for setting the length of the path of travel of the engaging device (3, 4, 6) thereby to adjust the cut length of the tubular casings (2); and

a storage device (15) to permit transfer to the storage station of a tubular casing (2) having a knotted loop (1) at one end, to provide a store of suspended unfilled tubular casings,

characterised in that the engaging device comprises a hook (6) adapted to engage and release the knotted loop (1) of a casing (2) and is moveable automatically back and forth between the knotting and cutting station and the storage station so that the hook (6), under the control of the control means (13, 14, 28), automatically engages the closed end of the tubular film (32) by means of its knotted loop (1), draws it towards the storage station and thereafter releases the loop; and in that

the storage device (15) is arranged at the storage station to receive the loop (1) after the tubular film has been advanced.

2. Apparatus according to claim 1, wherein the hook of the engaging device is provided at one end of a reciprocable shuttle (3) carried by a movable support (4); wherein the engaging device includes a pivoted lever (9) at the other end of the shuttle (3), the lever being movable between an inoperative position and an operative position, normally adopting the inoperative position when the hook (6) is not engaged with a knotted loop (1) and moving to the operative position when the hook (6) draws a knotted loop (1) and attached tubular film to the storage station; and wherein the control means includes an actuator (12) arranged in the path of the lever (9) when in the operative position, to operate the control means for a further cycle of operation.

3. Apparatus according to claim 2, characterised in that a spring (7) is arranged to urge the hook (6) towards the support (4), the hook (6) moving against the action of the spring (7) when it draws the knotted loop (1) towards the storage station and thereby causing the lever (9) to move towards its operative position; and in that the storage device comprises a hook-shaped part (15) arranged to receive a knotted loop (1) of a tubular casing (2) when the latter falls under gravity, having been released by the hook (6) of the engaging device.

4. Apparatus according to claim 2 or 3, characterised in that the lever (9) remains in its inoperative position when the hook (6) of the engagement device is unable to engage with the knotted loop (1) by reason of fault either (a) in the supply of loop-forming material or (b) in the supply of the web (32) of tubular film, whereby the actuator (12) is not engaged by the lever (9) when the support (4) returns to the storage station and the apparatus thus automatically stops operation.

5. Apparatus according to claim 2, 3 or 4 and having an operating cylinder (5) coupled with the engaging device (3, 4, 6) to move the latter between the knotting and cutting station and the storage station, and a limit stop (17) engageable by the shuttle (3) in order to effect return movement of the shuttle (3) by means of the operating cylinder (5) and the control means (28) when the shuttle is at the knotting and cutting station.

6. Apparatus according to any preceding claim, characterised in that the said means for setting the length of the path of travel of the engaging device (3, 4, 6) to the storage station comprises the control means (28) and the storage device (15) coupled together for joint longitudinal movement along the path between the knotting and cutting station and the storage station.

**Patentansprüche**

1. Vorrichtung zum Herstellen ungefüllter Schlauchhüllen und zum Zuführen der Schlauchhüllen zu einer Sammelstation, an der sie aufgehängt werden, mit:

einer Einrichtung zum Zuführen einer Bahn aus schlauchförmigem Film (32),

einer Knot- und Schneidstation mit einer Knoteinrichtung zum Anbringen einer Knotenschleife (1) um den schlauchförmigen Film (32) herum, zur Bildung eines geschlossenen Endes an einer Schlauchhülle (2), und einer Schneideinrichtung, die den schlauchförmigen Film schneidet und dadurch eine vorbestimmte Länge an Schlauchhülle (2) schafft, welche mit der Knotenschleife (1) verbunden ist,

einer Einrichtung zum Fördern der Schlauchhülle (2) zu der Sammelstation, derart, daß sie in der Station an ihrer Knotenschleife (1) aufgehängt wird, mit einer Angreifeinrichtung (3, 4, 6), die derart betreibbar ist, daß sie an das geschlossene Ende des schlauchförmigen Films (32) angreift und dieses in Richtung auf die Sammelstation zieht, um dadurch den schlauchförmigen Film relativ zu der Knot- und Schneidstation weiterzubefördern;

einer Steuereinrichtung (13, 14, 28), die betriebsmäßig mit der Knoteinrichtung und der Schneideinrichtung gekoppelt ist und von der Angreifeinrichtung (3, 4, 6, 11), während diese eine Knotenschleife, an der sie angreift, zu der Sammelstation bewegt, betätigt wird, um die Anbringung einer weiteren Knotenschleife um den schlauchförmigen Film herum zu bewirken und den Film zu so schneiden, daß die vorbestimmte Länge an Schlauchhülle (2) geschaffen wird; einer Einrichtung (18, 19) zum Einstellen der Länge des Bewegungsweges der Angreifeinrichtung (3, 4, 6), um dadurch die geschnittene Länge der Schlauchhüllen (2) einzustellen; und

einer Sammeleinrichtung (15) für den Transfer einer an einem Ende mit einer Knotenschleife (1) versehenen Schlauchhülle (2) zu der Sammelstation, zur Schaffung eines Vorrats an aufgehängten ungefüllten Schlauchhüllen,

dadurch gekennzeichnet, daß die Angreifeinrichtung einen Haken (6) aufweist, der an der Knotenschleife (1) einer Hülle (2) angreifen und diese freigeben kann, und automatisch zwischen der Knot- und Schneidstation und der Sammelstation so hin- und herbewegbar ist, daß der Haken (6) unter der Steuerung der Steuereinrichtung (13, 14, 28) automatisch an dem geschlossenen Ende des schlauchförmigen Films (32) mittels dessen Knotenschleife (1) angreift, das geschlossene Ende in Richtung auf die Sammelstation zieht und anschließend die Schleife freigibt; und dadurch, daß

die Sammeleinrichtung (15) so an der Sammelstation angeordnet ist, daß sie die Schleife (1) aufnimmt, nachdem der schlauchförmige Film weiterbefördert worden ist.

2. Vorrichtung nach Anspruch 1, bei der der Haken der Angreifeinrichtung an einem Ende eines hin- und herbewegbaren Wagens (3) vorgesehen ist, der von einem bewegbaren Support (4) getragen ist; bei der die Angreifeinrichtung mit einem schwenkbaren Hebel (9) am anderen Ende des Wagens (3) versehen ist, der Hebel zwischen einer betriebslosen Position und einer Betriebsposition bewegbar ist, der Hebel normalerweise die betriebslose Position einnimmt, wenn der Haken (6) nicht an einer Knotenschleife (1) angreift, und in die Betriebsposition bewegt wird, wenn der Haken (6) eine Knotenschleife (1) und einen mit dieser verbundenen schlauchförmigen Film zu der Sammelstation zieht; und bei der die Steuereinrichtung mit einem Betätigungsglied (12) versehen ist, das in der Betriebsposition im Weg des Hebels (9) angeordnet ist, um die Steuereinrichtung für einen weiteren Arbeitszyklus zu betätigen.

3. Vorrichtung nach Anspruch 2, dadurch gekennzeichnet, daß eine Feder (7) so angeordnet ist, daß sie den Haken (6) zu dem Support (4) hin treibt, der Haken (6) gegen die Wirkung der Feder (7) bewegt wird, wenn er die Knotenschleife (1) zu der Sammelstation hin zieht, und dadurch bewirkt, daß der Hebel (9) in seine Betriebsposition bewegt wird; und dadurch, daß die Sammeleinrichtung ein hakenförmiges Teil (15) aufweist, das so angeordnet ist, daß es eine Knotenschleife (1) einer Schlauchhülle (2) aufnimmt, wenn die Schlauchhülle (2), nachdem sie von dem Haken (6) der Angreifeinrichtung freigegeben worden ist, unter Schwerkrafteinwirkung herabfällt.

4. Vorrichtung nach Anspruch 2 oder 3, dadurch gekennzeichnet, daß der Hebel (9) in seiner betriebslosen Position verbleibt, wenn der Haken (6) der Angreifeinrichtung durch einen Fehler entweder (a) bei der Zufuhr von Schleifenbildungsmaterial oder (b) bei der Zufuhr der Bahn aus schlauchförmigem Film nicht zum Angreifen an der Knotenschleife (1) in der Lage ist, wodurch der Hebel (9) nicht an dem Betätigungsglied (12) angreift, wenn das Support (4) zu der Sammelstation zurückkehrt, und die Vorrichtung somit automatisch den Betrieb einstellt.

5. Vorrichtung nach Anspruch 2, 3 oder 4, die versehen ist mit einem Arbeitszylinder (5), der mit der Angreifeinrichtung (3, 4, 6) gekoppelt ist, um die Angreifeinrichtung (3, 4, 6) zwischen der Knot- und Schneidstation und der Sammelstation zu bewegen, und mit einem Endanschlag (17) für den Wagen (3), um die Rückbewegung des Wagens (3) durch den Arbeitszylinder (5) und die Steuereinrichtung (28) zu bewirken, wenn sich der Wagen an der Knot- und Schneidstation befindet.

6. Vorrichtung nach einem der vorhergehenden Ansprüche, dadurch gekennzeichnet, daß die Einrichtung zum Einstellen der Länge des Bewegungsweges der Angreifeinrichtung (3, 4, 6) zu der Sammelstation die Steuereinrichtung (28) und die Sammeleinrichtung (15) aufweist, die zur gemeinsamen Längsbewegung längs des Weges zwischen der Knot- und Schneidstation und der Sammelstation zusammengekoppelt sind.

**Revendications**

1. Appareil pour former des enveloppes tubulaires non remplies et pour les délivrer à un poste de stockage où elles sont suspendues, l'appareil comprenant:

un moyen pour fournir une banded un film tubulaire (32),

un poste de nouage et de coupe comportant un dispositif de nouage agencé de manière à appliquer une boucle nouée (1) autour du film tubulaire (32) pour former une extrémité fermée d'une enveloppe tubulaire (2) et un dispositif de coupe agencé de manière à couper le film tubulaire et former, de cette façon, une longueur prédéterminée d'une enveloppe tubulaire (2) fixée à la boucle nouée (1),

un moyen pour transporter l'enveloppe tubulaire (2) jusqu'au poste de stockage pour être suspendue par sa boucle nouée (1) à ce poste, ce moyen comprenant un dispositif d'accrochage (3, 4, 6) pouvant être actionné pour accrocher l'extrémité fermée du film tubulaire (32) et pour le tirer vers le poste de stockage de manière à avancer ainsi le film tubulaire par rapport au poste de nouage et de coupe;

un moyen de commande (13, 14, 28) couplé fonctionnellement au dispositif de nouage et au dispositif de coupe et actionné par le dispositif d'accrochage (3, 4, 6, 11) lorsqu'il déplace une boucle nouée accrochée jusqu'au poste de stockage, afin d'effectuer l'application d'une autre boucle nouée autour du film tubulaire et de couper ce film de manière à fournir la longueur prédéterminée d'enveloppe tubulaire (2); un moyen (18, 19) pour fixer la longueur de la course du dispositif d'accrochage (3, 4, 6) pour ajuster de cette façon la longueur coupée des enveloppes tubulaires (2); et

un dispositif de stockage (15) destiné à permettre le transfert jusqu'au poste de stockage d'une enveloppe tubulaire (2) comportant une boucle nouée (1) à une de ses extrémités, de manière à fournir une réserve d'enveloppes tubulaires vides suspendues,

caractérisé en ce que le dispositif d'accrochage comprend un crochet (6) adapté pour accrocher et libérer la boucle nouée (1) d'une enveloppe (2) et peut effectuer un mouvement de va-et-vient automatiquement entre le poste de nouage et de coupe et le poste de stockage, de sorte que le crochet (6), sous la commande du moyen de commande (13, 14, 28), accroche automatiquement l'extrémité fermée du film tubulaire (32) au moyen de sa boucle nouée (1), la tire vers le poste de stockage puis libère la boucle; et en ce que

le dispositif de stockage (15) est disposé au poste de stockage de manière à recevoir la boucle (1) après que le film tubulaire a été avancé.

2. Appareil selon la revendication 1, dans lequel le crochet du dispositif d'accrochage se trouve à une des extrémités d'une navette (3) à mouvement alternatif supportée par un support mobile (4); dans lequel le dispositif d'accrochage comprend un levier pivotant (9) à l'autre extrémité de la navette (3), le levier pouvant être déplacé entre une position inactive et une position active, en adoptant normalement la position inactive lorsque le crochet (6) n'accroche pas une boucle nouée (1) et se déplaçant jusqu'à la position active lorsque le crochet (6) tire jusqu'au poste de stockage une boucle nouée (1) et le film tubulaire attaché; et dans lequel le moyen de commande comprend un actionneur (12) disposé dans le trajet du levier (9) dans la position active afin d'actionner le moyen de commande en vue d'un autre cycle de fonctionnement.

3. Appareil selon la revendication 2, caractérisé en ce qu'un ressort (7) est disposé de manière à solliciter le crochet (6) vers le support (4), le crochet (6) se déplaçant à l'encontre de l'action du ressort (7) quand il tire la boucle nouée (1) en direction du poste de stockage et faisant se déplacer le levier (9) vers sa position active; et en ce que le dispositif de stockage comprend une partie (15) en forme de crochet disposée de manière à recevoir une boucle nouée (1) d'une enveloppe tubulaire (2), quand cette dernière tombe sous l'effet de la pesanteur, après avoir été libérée par le crochet (6) du dispositif d'accrochage.

4. Appareil selon la revendication 2 ou 3, caractérisé en ce que le levier (9) reste dans sa position inactive lorsque le crochet (6) du dispositif d'accrochage ne peut pas accrocher la boucle nouée (1) par suite d'une défaillance, soit (a) dans la fourniture du matériau de formation de boucle, soit (b) dans l'alimentation de la bande (32) de film tubulaire, grâce à quoi l'actionneur (12) n'est pas rencontré par le levier (9) quand le support (4) revient vers le poste de stockage et l'appareil cesse ainsi automatiquement de fonctionner.

5. Appareil selon la revendication 2, 3 ou 4 et comportant un vérin d'actionnement (5) couplé au dispositif d'accrochage (3, 4, 6) pour déplacer ce dernier entre le poste de nouage et de coupe et le poste de stockage, et une butée (17) de limitation de course pouvant être rencontrée par la navette (3) pour qu'un déplacement de retour soit imprimé à la navette (3) au moyen du vérin d'actionnement (5) et du moyen de commande (28) lorsque la navette se trouve au poste de nouage et de coupe.

6. Appareil selon l'une quelconque des revendications précédentes, caractérisé en ce que ledit moyen pour fixer la longueur de la course du dispositif d'accrochage (3, 4, 6) jusqu'au poste de stockage comprend le moyen de commande (28) et le dispositif de stockage (15) couplés l'un à l'autre en vue d'un déplacement longitudinal conjoint le long du trajet entre le poste de nouage et de coupe et le poste de stockage.

FIG.1

FIG.2

FIG. 3

FIG. 4

1

FIG. 5

FIG. 6

VIII

2

FIG. 7

FIG. 8